## Europäisches Patentamt
## European Patent Office
## Office européen des brevets

(19)

(11) Veröffentlichungsnummer : **0 036 062**
**B1**

(12)

# EUROPÄISCHE PATENTSCHRIFT

(45) Veröffentlichungstag der Patentschrift :
03.11.82

(21) Anmeldenummer : 81100010.8

(22) Anmeldetag : 03.01.81

(51) Int. Cl.$^3$ : **C 09 J   3/16, C 08 G 63/18**

(54) **Verwendung von Copolyestern als Schmelzkleber.**

(30) Priorität : 05.03.80 DE 3008360

(43) Veröffentlichungstag der Anmeldung :
23.09.81 (Patentblatt 81/38)

(45) Bekanntmachung des Hinweises auf die Patenterteilung : 03.11.82 Patentblatt 82/44

(84) Benannte Vertragsstaaten :
CH FR IT LI NL

(56) Entgegenhaltungen :
US A 3 515 628

CHEMICAL ABSTRACTS, Band 86, Nr. 26, 27. Juni
1977, Seite 37, Zusammenfassung 190976u
Columbus, Ohio, US

(73) Patentinhaber : CHEMISCHE WERKE HÜLS AG
Postfach 1320
D-4370 Marl 1 (DE)

(72) Erfinder : Horlbeck, Gernot, Dr.
In der Thiebrei 80
D-4358 Haltern (DE)
Erfinder : Burzin, Klaus, Dr.
Wellerfeldweg 164
D-4370 Marl (DE)

## Verwendung von Copolyestern als Schmelzkleber

Seit Jahren werden Schmelzkleber aus unterschiedlichen Rohstoffen zum Anbringen von Kantenmaterial an Holzplatten eingesetzt. An diese Schmelzkleber werden vielseitige Anforderungen gestellt, da das Kantenmaterial aus sehr verschiedenen Rohstoffen, wie thermoplastischen oder duroplastischen Kunststoffen, Holzfurnier o. ä., hergestellt wird und auf der anderen Seite an die Verkleber hohe mechanische und thermische Anforderungen gestellt werden.

Die Verwendung von amorphen wie auch teilkristallinen Copolyestern als Schmelzkleber ist bekannt. So werden beispielsweise Polyester mit einem Schmelzpunkt von 160 bis 220 °C beschrieben, die aus Terephthalsäure, gegebenenfalls Isophthalsäure, und einem oder mehreren Diolen mit 2 bis 10 C-Atomen aufgebaut sind (DE-C-19 12 117 und 11 03 489). Derartige Copolyester haben jedoch den Nachteil, daß sie relativ hohe Schmelzpunkte aufweisen, so daß sie bei Temperaturen von 200 bis 240 °C aufgetragen werden müssen und daher als Schmelzkleber für wärmeempfindliche Materialien ungeeignet sind.

Ein weiterer Nachteil sind die relativ hohe Kristallinität und der hohe Glasumwandlungsbereich. Die Verklebungen weisen aus dem zuletztgenannten Grund bei Temperaturen unter 20 °C eine zu starke Sprödigkeit auf ; wegen des hohen kristallinen Anteils ist ihre Klebfestigkeit zu gering.

Durch Erhöhung des Anteils einer zweiten Dicarbonsäure neben Terephthalsäure können Copolyester mit tieferen Schmelzpunkten und geringerem Kristallisationsgrad hergestellt werden. Bekannte Copolyester mit Schmelzpunkten unter 130 °C zeigen bei der Verwendung als Schmelzkleber eine zu geringe Wärmestandfestigkeit, d. h. die Verklebungen lösen sich bereits bei Temperaturen oberhalb 60 °C. Die Schmelzkleber sind außerdem in der Regel so schwach kristallin, daß sie in vielen Fällen ihre Oberflächenklebrigkeit erst nach Tagen oder überhaupt nicht verlieren (DE-A-19 20 432 und 24 35 863).

Die in US-A-3 515 628, Tabelle 1, aufgeführten Copolyester weisen entweder zu hohe Glasumwandlungsbereiche oder zu hohe bzw. zu geringe Kristallinität auf, um als Schmelzkleber für den genannten Verwendungszweck eingesetzt werden zu können.

Aufgabe der Erfindung war es, Copolyester zu finden, die als Schmelzkleber für den vorgesehenen Verwendungszweck geeignete Eigenschaften aufweisen und welche die Nachteile des Standes der Technik vermeiden.

Diese Aufgabe konnte durch die Verwendung von Copolyestern hergestellt aus

a) 15-85 Mol-%, vorzugsweise 40-70 Mol-%, Terephthalsäure,
b) 10-60 Mol-%, vorzugsweise 20-40 Mol-%, Hexahydroterephthalsäure,
c) 5-25 Mol-%, vorzugsweise 10-20 Mol-%, Dodecandicarbonsäure,

sowie

d) 60-100 Mol-%, vorzugsweise 100 Mol-%, Butandiol-(1.4),
e) 0-40 Mol-% aliphatischen und/oder cycloaliphatischen Diolen mit 2 bis 12 C-Atomen,

als Schmelzkleber zur Kantenverleimung gelöst werden, wobei die Copolyester

einen Glasumwandlungsbereich $(T_g) = < 0 \,°C$,
eine Rekristallisationstemperatur $(T_{K^*})$ im Bereich von 75 bis 125 °C

und

eine Kristallinität — ausgedrückt durch das maximale Dämpfungsdekrement $(\Lambda)$ im Bereich von 0,5 bis 1,2,

aufweisen.

Die Hexahydroterephthalsäure kann als niederer Dialkylester oder als freie Säure eingesetzt werden. Ein cis/trans-Isomerenverhältnis von 70 : 30 ist bevorzugt.

Die Diolkomponente besteht vorzugsweise ausschließlich aus Butandiol-(1.4) ; gegebenenfalls können jedoch bis zu 40 Mol-% des Butandiol-(1.4) durch aliphatische und/oder cycloaliphatische Diole mit 2 bis 12 C-Atomen in der Kohlenstoffkette ersetzt werden.

Als aliphatische Diole können z. B. Ethylenglykol, Propandiol-(1.2), Propandiol-(1.3), Neopentylglykol, Hexandiol-(1.6) oder Dodecandiol-(1.2) eingesetzt werden. Cycloaliphatische Diole sind beispielsweise die Dihydroxymethylcyclohexane oder Bis-(hydroxymethyl))-tricyclo $[5.2.1.0^{2.6}]$ decan.

Die Herstellung der Copolyester erfolgt analog der Poly-(butylenterephthalat)-Herstellung, wie sie beispielsweise in Sorensen und Campbell, Preparative Methods of Polymer Chemistry, Interscience, NY 1961, S. 111 bis 127 und im Kunststoffhandbuch, Band 8 (Polyester), C. Hanser Verlag München 1973, S. 697 bzw. in Journal of Polymer Science, Part A1, 4, 1851 bis 1859 (1966), beschrieben ist.

Werden freie Säuren bei der Herstellung eingesetzt, kann die Veresterung sowohl vor der Umesterung eventuell eingesetzter Dialkylester als auch während oder nach der Umesterung erfolgen.

Die Copolyester weisen Viskositätszahlen von 50 bis 80 cm³/g vorzugsweise 60 bis 70 cm³/g ; eine Kristallinität — ausgedrückt durch das maximale Dämpfungsdekrement $\Lambda$ von 0,5 bis 1,2, vorzugsweise von 0,7 bis 1,0 ; sowie eine Rekristallisationstemperatur ($T_{K*}$) im Bereich von 75 bis 125 °C, vorzugsweise von 90 bis 110 °C, auf. Der Schmelzbereich der Polyester beträgt etwa 130 bis 160 °C, und der Glasumwandlungsbereich liegt bei < 0 °C, vorzugsweise bei −20 bis −2 °C.

Die Copolyester können Zusatzstoffe, wie Pigmente, Mattierungsmittel, Verarbeitungshilfsmittel, Füllstoffe sowie übliche Thermo- und UV-Stabilisatoren enthalten.

Die Schmelzkleber, die erfindungsgemäß als Kantenleime verwendet werden, können durch Aufschmelzen der Copolyester und Einarbeiten der Füllstoffe und eventuell anderer Zusatzstoffe hergestellt werden.

Die Kantenverleimung erfolgt in der Regel auf Kantenanleimmaschinen. Dabei wird der Kantenleim aus der Schmelze entweder auf die Kante der Platte oder auf das Kantenmaterial aufgetragen und durch anschließendes Verpressen eine Verklebung erreicht.

Eine Variante der Verklebetechnik besteht darin, mit einem erfindungsgemäßen Schmelzkleber vorbeschichtetes Kantenmaterial unter Wärmeeinwirkung auf die Kante zu pressen.

Im Vergleich zu Produkten des Standes der Technik weisen die als Schmelzkleber eingesetzten erfindungsgemäßen Copolyester eine bessere Flexibilität in der Kälte auf, obwohl gleichzeitig auch die Wärmebeständigkeit verbessert werden konnte. Diese Eigenschaftkombination ist nach den bisherigen Kenntnissen für derartige Schmelzkleber unerwartet.

Zur Charakterisierung der Copolyester dienen folgende Kenndaten :

Die Viskositätszahl J wurde an Lösungen von 0.23 g Copolyester in 100 ml Phenol/1.1.2.2-Tetrachlorethan (Gewichtsverhältnis 60 : 40) bei 25 °C bestimmt.

Als Schmelzpunkt ($T_m$) wurde das Schmelzmaximum der Differential-Scanning-Kalorimetrie (DSA ; Abkühl- bzw. Aufheizgeschwindigkeit : 16 °C/min) angegeben.

Als Rekristallisationstemperatur ($T_{K*}$) wurde das Rekristallisationsmaximum der DSC-Kurve angegeben, wobei die Probe von 250 °C ab mit 16 °C/min abgekühlt wurde.

Als Glasumwandlungsbereich ($T_g$) wurde das Temperaturintervall in der DSC-Kurve angegeben, das sich als Differenz der Schnittpunkte der im — durch die Änderung der spezifischen Wärme verursachten — Wendepunkt angelegten Tangente mit den extrapolierten Geraden ober- und unterhalb dieses Bereiches ergibt. Auch bei dieser Messung wurde die bei 250 °C aufgeschmolzene Probe mit 16 °C/min abgekühlt.

Als Maß für den Kristallisationsgrad wurde das maximale Dämpfungsdekrement $\Lambda$ bei der Glastemperatur der Torsionsschwingungsanalyse (f = 1 Hz) angegeben. (Je niedriger $\Lambda$ ist, desto höher ist der Kristallisationsgrad).

Für die Prüfung der Wärmestandfestigkeit der mit den erfindungsgemäßen Schmelzklebern durchgeführten Verklebungen wurde der Wärmestandversuch zur Prüfung von Schmelzklebestoffen für die Kantenverleimung (WPS 68, Adhäsion Heft 1, 1969) zugrundegelegt.

## A. Herstellung der Copolyester

### Beispiel 1

In einem 100 l-Kessel werden 23.3 kg Dimethylterephthalat, 12 kg Dimethylhexahydroterephthalat, 4.55 kg Dodecandisäure, 32 kg Butandiol-(1.4) und 12 g Titantetraisopropylat bei 150 °C aufgeschmolzen und bei 190 °C im Stickstoffstrom unter Rühren um- bzw. verestert, bis die theoretische Menge an Methanol und $H_2O$ abgespalten ist. Danach wird innerhalb einer Stunde die Reaktionstemperatur auf 250 °C erhöht und innerhalb einer weiteren Stunde ein Vakuum von ≤ 1 mbar angelegt. Unter diesen Bedingungen wird die Schmelze zwei Stunden polykondensiert. Das Vakuum wird mit Stickstoff aufgehoben. Anschließend wird der Copolyester ausgefahren, gekühlt und granuliert.

Die Kenndaten dieses und der folgenden Copolyester sind in Tabelle 1 zusammengestellt.

Die Zusammensetzung des Copolyesters war :

Terephthalsäure/Hexahydroterephthalsäure/Dodecandisäure//Butandiol-(1.4) = 60/30/10//10 Mol-%.

### Beispiele 2-5

In Analogie zur Herstellung des Copolyesters aus Beispiel 1 wurden 4 weitere Copolyester mit folgender Zusammensetzung des Endproduktes hergestellt :

Beispiel 2 :
Terephthalsäure/Hexahydroterephthalsäure/Dodecandisäure//Butandiol-(1.4) = 60/20/20//100 Mol-%

Beispiel 3 :
Terephthalsäure/Hexahydroterephthalsäure/Dodecandisäure//Butandiol-(1.4)/Hexandiol-(1.6) = 70/20/10//90/10 Mol-%

Beispiel 4 :

3

Terephthalsäure/Hexahydroterephthalsäure/Dodecandisäure//Butandiol-(1.4) = 55/35/10//100 Mol-%

Beispiel 5 :

Terephthalsäure/Hexahydroterephthalsäure/Dodecandisäure//Butandiol-(1.4)/Dodecandiol-(1.12) = 65/20/15//90/10 Mol-%.

Tabelle 1

| Beispiel | J [cm³/g] | $T_m$ [°C] | $T_K*$ [°C] | $T_g$ [°C] | Λ |
|----------|-----------|------------|-------------|------------|-----|
| 1 | 75 | 155 | 110 | − 14/− 2 | 0.8 |
| 2 | 68 | 145 | 103 | − 18/− 10 | 0.8 |
| 3 | 70 | 155 | 100 | − 15/− 6 | 0.9 |
| 4 | 72 | 142 | 96 | − 10/− 2 | 0.7 |
| 5 | 66 | 141 | 91 | − 17/− 8 | 1.1 |

B. Prüfung der Wärmestandfestigkeit

Bei den erfindungsgemäßen Schmelzklebern wurden folgende Wärmestandfestigkeiten erzielt :

Tabelle 2

| Beispiel | Wärmestandfestigkeit (WPS 68) |
|----------|-------------------------------|
| 1 | 140 − 145 °C |
| 2 | 135 − 140 °C |
| 3 | 145 − 155 °C |
| 4 | 135 − 140 °C |
| 5 | 135 − 140 °C |

Die Copolyester der Beispiele 1 bis 5 zeigen bei Temperaturen im Bereich von 0 bis 70 °C gute Haftung an üblichen Kantenmaterialien, wie z.B. Schichtstoffkanten auf Polyester-, Melamin bzw. Melamin-Phenol-Basis, PVC und unterschiedlichen Holzlaminaten.

**Ansprüche**

1. Verwendung von Copolyestern hergestellt aus

a) 15- 85 Mol-% Terephthalsäure,
b) 10-60 Mol-% Hexahydroterephthalsäure,
c)   5-25 Mol-% Dodecandicarbonsäure,

sowie

d) 60-100 Mol-% Butandiol-(1.4),
e)   0- 40 Mol-% aliphatischen und/oder cycloaliphatischen Diolen mit 2 bis 12 C-Atomen,

als Schmelzkleber zur Kantenverleimung, wobei die Copolyester

einen Glasumwandlungsbereich ($T_g$) = < 0 °C,
eine Rekristallisationstemperatur ($T_{K*}$) im Bereich von 75 bis 125 °C

und

eine Kristallinität — ausgedrückt durch das maximale Dämpfungsdekrement (Λ) im Bereich von 0,5 bis 1,2,

aufweisen.

2. Verwendung von Copolyestern gemäß Anspruch 1, die in der Säurekomponente hergestellt sind

**0 036 062**

aus

a) 40-70 Mol-% Terephthalsäure,
b) 20-40 Mol-% Hexahydroterephthalsäure,
c) 10-20 Mol-% Dodecandicarbonsäure.

**Claims**

1. The use of copolyesters of

a) 15 to  85 mol-% of terephthalic acid,
b) 10 to  60 mol-% of hexahydroterephthalic acid,
c)  5 to  25 mol-% of dodecane dicarboxylic acid,

and

d) 60 to 100 mol-% of butanediol-(1,4),
e)  0 to  40 mol-% of aliphatic and/or cycloaliphatic diols of 2 to 12 carbon atoms,

as hot-melt adhesives for glueing-on edging materials, the copolymers having

a glass transition temperature ($T_g$) $< 0\,°C$,
a recrystallization temperature ($T_{K*}$) in the range from 75 to 125 °C and

a crystallinity, expressed as the maximum damping decrement ($\Lambda$), in the range from 0.5 to 1.2.

2. The use according to claim 1 of copolyesters which, in respect of their acid component, are manufactured from

a) 40 to 70 mol-% of terephthalic acid,
b) 20 to 40 mol-% of hexahydroterephthalic acid,
c) 10 to 20 mol-% of dodecane dicarboxylic acid.

**Revendications**

1. Application de copolyesters préparés à partir

a) de 15 à  85 mol-% d'acide téréphtalique,
b) de 10 à  60 mol-% d'acide hexahydrotéréphtalique,
c) de  5 à  25 mol-% d'acide dodécane-dicarboxylique,

ainsi qu'à partir

d) de 60 à 100 mol-% de butane-diol-(1,4),
e) de  0 à  40 mol-% de diols aliphatiques et/ou cyclo-aliphatiques contenant de 2 à 12 atomes de carbone,

comme adhésifs fusibles pour le collage des chants, les copolyesters présentant

un intervalle de transition vitreuse ($T_g$) situé au-dessous de 0 °C,
une température de recristallisation ($T_{K*}$) comprise entre 75 et 125 °C

et

une cristallinité, exprimée par un décrément maximal d'amortissement ($\Lambda$) compris entre 0,5 et 1,2.

2. Application de copolyesters selon la revendication 1, qui, dans le constituant acide, sont préparés à partir

a) de 40 à 70 mol-% d'acide téréphtalique,
b) de 20 à 40 mol-% d'acide hexahydrotéréphtalique,
c) de 10 à 20 mol-% d'acide docécane-dicarboxylique.

5